# EUROPEAN PATENT APPLICATION

(11) **EP 2 040 491 A1**
(43) Date of publication of application: **25.03.2009**
(21) Application number: 07018498.1
(22) Date of filing: 20.09.2007
(51) Int. Cl.: H04W 4/00

(54) **Control unit for and method of providing access to services of an information distribution system**

(71) Applicant: Nokia Siemens Networks Oy, 02610 Espoo (FI)
(72) Inventor: Enderlein , Janos-Gerold, Dr., 10115 Berlin (DE); Radtchenko, Andrei, 14641 Pessin (DE)
(74) Representative: Bruglachner, Thomas E.

(57) **Abstract**

A control unit for an information distribution system is described, wherein the control unit is being adapted for generating a list of at least a portion of a plurality of services, wherein the list is derived based on a predetermined actual localisation of the mobile communication unit. In particular, the control unit also may assign, provide, or grant access to at least a portion or subset of the services listed on the list.

## Description

### Field of invention

The present invention relates to the field of control units for and methods of providing access to services of an information distribution system. Furthermore, the invention relates to an information distribution system, a program element and a computer readable medium.

### Art Background

Communication applications or information distribution services in GSM/UMTS nets are commonly associated with net and/or service providers, like nationwide or international telecommunication network operators. Examples for such information distributed services in the field of telecommunication industry may be so-called value-added service (VAS) which relate to non-core services or, in short, all services beyond standard voice calls. On a conceptual level, value-added services "add value" to the standard service offering, spurring the subscriber to use their phone more. For mobile phones, while technologies like SSM, MMS, and GPRS are usually considered value-added services, a distinction may also be made between standard content and premium-charged content. Value-added services are supplied either in-house by the mobile network operator themselves or by a third-party value-added service provider (VASP).

However, the known information distribution systems may be inflexible and hard to handle by the respective mobile network operators.

There may be a need for a control unit for and a method of providing access to an information distribution system, an information distribution system, a program element, and a computer readable medium providing an improved flexibility which may be usable in a wide variety of ways.

### Summary of the Invention

This need may be met by the subject-matter according to the independent claims. Advantageous embodiments of the present invention are described by the dependent claims.

According to an exemplary aspect of the invention a control unit for an information distribution system is provided, wherein the control unit is being adapted for generating a list of at least a portion of a plurality of services, wherein the list is derived based on a predetermined actual localisation of the mobile communication unit. In particular, the control unit also may assign, provide, or grant access to at least a portion or subset of the services listed on the list. Furthermore, the plurality of services may be assigned to different local areas. That is, each service of the plurality of services may be assigned to another local area or each subset of the plurality of services may be assigned to a respective local area.

According to an exemplary aspect of the invention an information distribution system is provided, wherein the information distribution system comprises a control unit according to an exemplary aspect of the invention, a localisation unit, and at least one server, wherein the at least one server is adapted to store the plurality of services which are assigned to different local areas, and wherein the localisation unit is adapted to determine the actual localisation of the mobile communication unit. In particular, the control unit may be adapted to grant access to at least one of the services listed on the list. Further, the information distribution system may be formed by a single server system or by a plurality of individual servers. Furthermore, it may be possible that the functions of the localisation unit, the control unit, and of the server are executed or performed by a single server or computer having one or more processing units and one or more memories adapted to store the services and/or the data necessary to perform the services, e.g. computer programs.

According to an exemplary aspect of the invention a method of providing access to services of an information distribution system is provided, wherein the method comprises obtaining an actual localisation of a mobile communication unit and generating a list of at least a portion of a plurality of services, wherein the list is derived based on a determined actual localisation. In particular, the method may further comprise the step of providing access to at least one of the services listed on the list. In particular, the actual localisation may be obtained by determining the actual location or getting the actual localisation from the mobile communication unit

According to an exemplary aspect of the invention a program element is provided, which, when being executed by a processor, is adapted to control or carry out a method according to an exemplary aspect of the invention.

According to an exemplary aspect of the invention a computer-readable medium is provided, in which a computer program is stored which, when being executed by a processor, is adapted to control or carry out a method according to an exemplary aspect of the invention.

By providing a method according to an exemplary aspect of the invention it may be possible to provide a more flexible method of providing information and/or services. In particular, it may be possible to provide dedicated lists for each user depending on the actual position of the user or the position of a mobile communication unit of the user. Thus, it may be possible to provide local area services instead of nationwide services, for example. In particular, it may be possible to provide a list listing all services available at the respective location. The listing may in particular be structured, e.g. may form a hierarchical list. Thus, it may be possible to structure the available services according to their respective content, like different topics.

A gist of an exemplary aspect may be seen in the fact that an information distribution system is provided which allows the listing and optionally the access to information services based on an actual position or location of a mobile communication unit. Thus, it may be possible to provide local services particularly dedicated to the respective location.

Next, further exemplary embodiments of the information distribution system are described. However, these embodiments also apply to the control unit, the method, the program element, and the computer readable medium.

According to another exemplary embodiment of the information distribution system the system is further adapted to perform management functions concerning subscribers of the information distribution system. In particular, the server and/or the control unit may be adapted to perform these management functions either alone or together with the other element or even together with further elements of the system.

According to another exemplary embodiment of the information distribution system the management functions comprise an invoicing function based on services used by the mobile communication unit.

Thus, it may be possible to provide an invoicing function in the system so that value-added service (VAS) may be provided by the information distribution system and/or the operator/provider of the same while the system provide the functionality of billing for these services.

According to another exemplary embodiment of the information distribution system the control unit is adapted to send the list to the mobile communication unit. In particular, the control unit may be adapted to transmit a portion of the list according to a predetermined criteria. That is, it may be possible to select the portion of the list which is sent to the mobile communication unit based on the predetermined criteria.

Thus, it may be possible for the user of the mobile communication unit to choose between all listed services. However, since it may also be possible to predetermine a criteria, e.g. by the user of the mobile communication unit, the transmitted data may be reduced. For example, a criteria may be that only services relating to sport or news may be listed and transmitted. Therefore, the amount of data to be transferred may be further reduced.

According to another exemplary embodiment of the information distribution system the at least one service is a local service. In particular, the term "local services" or "local applications" may denote a service which is specific for a given area or local position. Such a given area may be a city or in the case of greater cities even a district of a city. Of course, it may also be possible that all services are local services in such a sense.

According to another exemplary embodiment of the information distribution system the system is adapted to receive services from the mobile communication unit.

That is, it may be possible that the mobile communication unit is not only usable to download services from the server and/or the information distribution system but may also be adapted to upload services, like any kind of data which can be communicated, e.g. video, music, documents or the like.

Thus, the information distribution system may be adapted to provide services and/or information to a mobile communication unit and to receive services and/or information from the mobile communication unit. For example, it may be possible for a user of a mobile communication unit to upload own services or information, e.g. own video clips, documents or the like, onto the server of the information distribution system. These services may be stored on the server, e.g. in a memory of the server, and may then be accessible or retrievable from other users by using other mobile communication units. In case of uploading services the system may be adapted to credit the respective mobile communication unit or the user of the respective mobile communication unit a specific amount. The amount may depend on the kind of service which is uploaded by the respective mobile communication unit. However, it may also be possible to debit the respective mobile communication unit for uploading a service. In this case it may be possible to credit the respective mobile communication unit each time the respective uploaded service is downloaded from another mobile communication unit.

Next, further exemplary embodiments of the method are described. However, these embodiments also apply to the control unit, the information distribution system, the program element, and the computer readable medium.

According to another exemplary embodiment the method further comprises modifying at least one service for a specific area. In particular, the at least one service may be a Mini Area Service. For example, the modifying may be done by creating a new Mini Area Service, modifying a Mini Area Service already present or deleting a given Mini Area Service. The specific area may be defined by a provider of the Mini Area Service Provider via a Mini Area Service front end program.

According to another exemplary embodiment of the method the modifying the at least one service may be done via the mobile communication unit. The modifying may include creating, modification, deleting or uploading, and streaming at least one service by the mobile communication unit.

According to another exemplary embodiment the method further comprises installing a front end program for modifying a service on the mobile communication unit.

According to another exemplary embodiment of the method the modifying comprises the assigning of at least one service to a local area.

According to another exemplary embodiment the method further comprises downloading at least one of the listed services. In particular, it should be noted that the term downloading may cover all forms of subscribing, e.g. may also cover streaming or downloading, the service or content. Thus, it is possible that also streaming-based services can be created by a provider of the services, e.g. Mini Area Services. In particular, a Mini Area Services provider may send through the Mini Area Services Platform Provider own services in stream form, e.g. video, audio, or text, to all subscribed user (subscriber).

Summarizing an exemplary aspect of the invention may be seen in the fact that a Mini Area Information Service Platform (MAISP) is provided, which comprises a server unit, wherein the server unit is adapted to determine a list of Mini Area Information Services corresponding to a determined position of a mobile communication unit. Such a MAISP may be provided by a MAISP provider or operator and may comprise a server forming a platform on which services may be stored and/or relayed. Furthermore, the server may ensure managing of the user or subscriber including identifying and billing or invoicing. The term "Mini Area Information Service" (MAIS) may in particular express the fact that the information services may be limited to defined local areas, e.g. cities, compared to common information services provided by nationwide or even international providers. Examples for such MAIS may be blog pages, file sharing networks or markets, information pages, notice- or bill-boards and the like.

Thus, a platform may be provided which may allow a user or subscriber to make available a service or application for other users. For these purposes the user may upload the respective service onto the MAISP so that the user may perform as some kind of "service provider". This, may be in contrast to common mobile communication networks in which the user may not act as a "service provider" and may not be able to upload own services on a respective server so that these services are available for other users. Due to the fact that such services are generally limited in complexity, scope, and/or size the respective information services may also be called "Mini Services". However, it may also be possible that the respective "Mini Services" are provided by professional providers so that these services may also be designed in a professional way and complexity. In case a Mini Service subscriber enters a defined geographical area and requests for Mini Services the respective subscriber or user may get a list of all or specific Mini Services available in that geographical area. Afterwards the user may choose among these services which service he would like to use.

The Mini Service provider and the Mini Service subscriber as a whole may form a virtual marketplace or mobile marketplace. This marketplace may be related to a specific local area. In particular, each Mini Service subscriber may also act as a Mini Service provider and provide some information, data and/or media services. Such a virtual marketplace may be accessed by network units, computers and/or by mobile communication units like mobile phones PDA and laptops.

In general an information distribution system according to an exemplary aspect of the invention may comprise a localisation unit, and a generation unit, wherein the localisation unit is adapted to determine a position of a mobile communication unit, and wherein the generation unit is adapted to generate a list of Mini Area Information Services corresponding to the determined position of the mobile communication unit. In particular, the whole system may comprise an information distribution system or MAISP server system having one or more servers, a cellular network comprising base stations and a mobile terminal or terminal equipment, e.g. a mobile phone or PDA, of a user or subscriber. On the mobile terminal a respective access software may be implemented.

The access software may in particular enable to connect the mobile unit to a MAISP server system or information distribution system, to retrieve a list of the Mini Services available and/or active in the given area, wherein the list may have a structured configuration, e.g. may be structured according to themes or topics, and to provide or upload a Mini Service to the MAISP server system. The upload may be, as well as the listing, according to a hierarchical structure. In particular, a list sorted by topics may be available indicating one or more categories in which a respective Mini Service may be stored. Furthermore, a sample of predefined service tools or skeletons may be provided for helping a generic generation of Mini Services.

The MAISP server system or information distribution system may enable a storing of relevant information of generated Mini Services, e.g. generated by using sceletons at the site of the Mini Service Provider, a localisation of the Mini Service provider and/or Mini Service subscriber, and a defining of the areas for activating of the Mini Services. Furthermore, the MAISP server system may enable the forwarding of Mini Services of or to the Mini Service provider, Mini Service subscriber and/or MAISP server. Additionally, the MAISP server system may enable, in case of a generic generation of Mini Services by the Mini Service providers, the forwarding and managing of a flow of information or data from the Mini Service provider to the Mini Service subscriber and vice versa. Moreover, the MAISP server system may enable that the Mini Service provider will be credited a respective amount for the providing of the respective Mini Services.

The exemplary aspects and embodiments defined above and further aspects of the present invention are apparent from the examples of embodiment to be described hereinafter and are explained with reference to the examples of embodiment. Also elements and/or features described in association with different exemplary embodiments and/or aspects may be combined. The invention will be described in more detail hereinafter with reference to examples of embodiment but to which the invention is not limited.

### Brief Description of the Drawings

Figure 1 shows a schematically illustration of an information distribution system.
Figure 2 shows a schematically illustration of local areas.

### Detailed Description

The illustration in the drawing is schematically. In the drawing similar or identical elements or elements having the same or identical function are labeled with the same or similar reference signs.

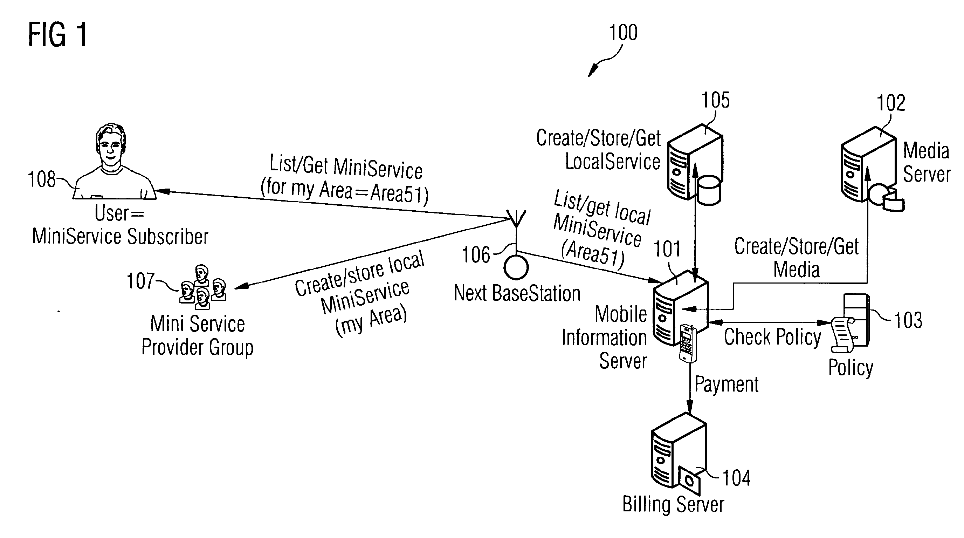

Fig. 1 shows a schematically illustration of an information distribution system or Mini Area Information Server Platform (MAISP) system 100 which comprises a central server 101 which may form a mobile information server. The central server 101 also forms a localisation unit, adapted to locate a mobile communication device, e.g. a mobile phone. Furthermore, the central server 101 comprises a control unit implemented either by specific hardwired circuits or preferably by way of a software program. The MAISP system 100 further comprises a media server 102 adapted to store media content or the like, a policy server 103 adapted to check policies of the MAISP system 100, a billing server 104 adapted to manage the payments needs of the MAISP system 100, and a Mini Service storing server 105, adapted to store Mini Services, data, information or the like. The function of all these servers which are shown in Fig. 1 as different servers may be performed by a single server. The central server 100 is further adapted to communicate with at least one base station 106 of a cellular network. Furthermore, Fig. 1 shows a Mini Service Provider Group 107, i.e. a group of service providers which are registered by a network operator or an operator of the MAISP system, which can communicate with the central server 101 via the base station 106. Furthermore, a user or subscriber of Mini Services is indicated in Fig. 1 and labelled with the reference sign 108.

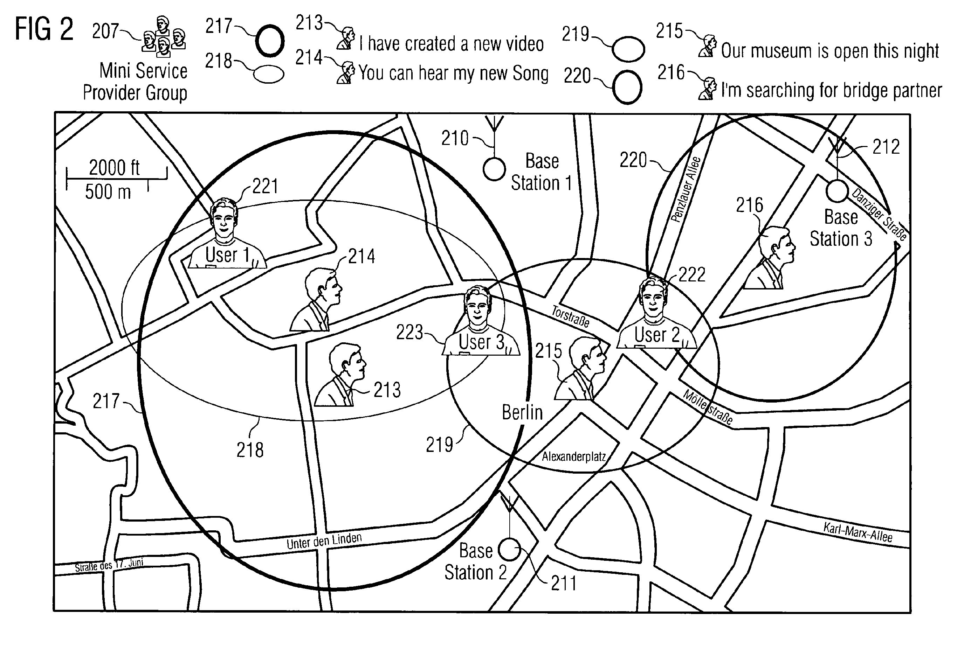

Fig. 2 shows a schematically illustration of local areas belonging to a MAISP system. A respective cellular network of the MAISP system is indicated by three base stations 210, 211, and 212. A respective Mini Service Provider Group 207 is indicated by four schematically illustrated people 213, 214, 215, and 216. All of the four Mini Service provider are associated with a respective local area 217, 218, 219, and 220, respectively, corresponding to the area in which the respective Mini Services can be received. Furthermore, three users or subscribers 221, 222, and 223 are schematically shown in Fig. 2.

In the following some more details of the operation of the MAISP system will be explained. For example, the user 221 moves in the city schematically depicted in Fig. 2. The user 221 has a mobile phone having an access program for the MAIS implemented, e.g. a MAIS front end program. The user 221 may use the MAISP system as a subscriber and may demand a list of possible Mini Services for an area 1 which corresponds to his actual position. In Fig. 2 the first local area 217 and the second local area 218 are available for the user 221. Thus, user 221 may receive a list of Mini Services available for him at his given location. For example, he may able to receive a new video created by the provider 213 or may receive a new song created by the provider 214. In the example shown in Fig. 2 these are the only two providers which may provide Mini Services at the position of user 221. Of course these two providers may provide more than one Mini Service each. However, in case the user 221 moves on to the position indicated by the user 223 in Fig. 2 he may also receive Mini Services from the third provider 215, e.g. the information that a museum of the third provider is opened that night.

The user 221 may select to download the video of provider 213. Together with the download of the video a specific amount is debited from an account of user 221 and at least a part thereof is credited to an account of the provider 213, i.e. the provider who has uploaded the respective video. A potential difference of the two amounts may be collected by the provider or operator of the MAISP system.

Additionally or alternatively the user 221 may chose to be a MAIS provider. For example, he would like to upload a piece of music to a MAISP system. This MAISP system may either be associated to a city or area A, which may relate to the actual and present position of the user 221 or may be associated to another city or area B which is distinct and distant to area A. Also in the case of uploading the user 221 has installed the MAIS front end program on his mobile communication unit, e.g. mobile phone. The user 221 may ask for the local Mini Services associated to area A, i.e. the area associated to the actual position of user 221. In particular, he may ask for a specific topic relating to music, e.g. to the topic "My own Music". In case the requested topic is not available a new topic may be opened or set up, or the user may chose another topic under which his piece of music should be stored and listed. After this choosing or set up the user 221 uploads his piece of music so that it is available on the MAISP system of area A and/or area B. In particular, the user 221 may chose in which areas his piece of music shall be available by other users or subscribers. Optionally, a fee for the upload has to be paid by the user who uploads the Mini Service, wherein the fee may be collected by the MAISP system operator.

It should be noted that the term "comprising" does not exclude other elements or steps and the "a" or "an" does not exclude a plurality. Also elements and/or features described in association with different exemplary embodiments and/or aspects may be combined. It should also be noted that reference signs in the claims should not be construed as limiting the scope of the claims.

### List of reference signs:

- 100: MAISP system
- 101: Central server
- 102: Media server
- 103: Policy server
- 104: Billing server
- 105: Mini Service storing server
- 106: Base station
- 107: Mini Service Provider Group
- 108: User/Subscriber
- 207: Mini Service Provider Group
- 210: Base station
- 211: Base station
- 212: Base station
- 213: First provider
- 214: Second provider
- 215: Third provider
- 216: Fourth provider
- 217: First local area
- 218: Second local area
- 219: Third local area
- 220: Fourth local area
- 221: User
- 222: User
- 223: User

## Claims

1. A control unit for an information distribution system (100), the control unit (101) being adapted for generating a list of at least a portion of a plurality of services, wherein the list is derived based on a predetermined actual localisation of a mobile communication unit.

2. An information distribution system (100), comprising
a control unit (101) according to claim 1,
a localisation unit (101), and
at least one server (101),
wherein the at least one server (101) is adapted to store the plurality of services which are assigned to different local areas (217, 218, 219, 220), and
wherein the localisation unit (101) is adapted to determine the actual localisation of the mobile communication unit.

3. The information distribution system (100) according to claim 2,
wherein the information distribution system (100) is further adapted to perform management functions concerning subscribers of the information distribution system (100).

4. The information distribution system (100) according to claim 3,
wherein the management functions comprise an invoicing function based on services used by the mobile communication unit.

5. The information distribution system (100) according to claim 2,
wherein the control unit (101) is adapted to send the list to the mobile communication unit.

6. The information distribution system (100) according to claim 5,
wherein the control unit (101) is further adapted to transmit a portion of the list according to a predetermined criteria.

7. The information distribution system (100) according to claim 2,
wherein the at least one service is a local service.

8. The information distribution system (100) according claim 2 wherein the information distribution system (100) is adapted to receive services from the mobile communication unit.

9. A method of providing the creation of services and access to services of an information distribution system (100), the method comprises:
obtaining an actual localisation of a mobile communication unit #,
generating a list of at least a portion of a plurality of services, wherein the list is derived based on a determined actual localisation, and
providing access to at least one of the services listed on the list.

10. The method according claim 9, further comprising:
modifying at least one of the services for a specific area.

11. The method according to claim 10,
wherein the modifying is done by the mobile communication unit.

12. The method according to claim 11, further comprising:
installing a front end program for modifying a service on the mobile communication unit.

13. The method according to claim 10,
wherein the modifying comprises the assigning of at least one service to a local area.

14. The method according to claim 9, further comprising: downloading at least one of the listed services.

15. A program element, which, when being executed by a processor, is adapted to control or carry out a method according to claim 9.

16. A computer-readable medium, in which a computer program is stored which, when being executed by a processor, is adapted to control or carry out a method according to claim 9.
